# EUROPÄISCHE PATENTSCHRIFT

(11) **EP 2 606 390 B1**
(45) Veröffentlichungstag und Bekanntmachung des Hinweises auf die Patenterteilung: **23.04.2014**
(21) Anmeldenummer: 11794004.9
(22) Anmeldetag: 04.08.2011
(51) Int. Cl.: G02B 7/02

(54) **MEHRSTUFIG JUSTIERBARE FASSUNGSBAUGRUPPE FÜR ZWEI OPTISCHE BAUTEILE**
MOUNT ASSEMBLY, WHICH IS ADJUSTABLE IN A PLURALITY OF STEPS, FOR TWO OPTICAL COMPONENTS
ENSEMBLE DE MONTURE AJUSTABLE EN PLUSIEURS STADES POUR DEUX COMPOSANTS OPTIQUES

(30) Priorität: 19.08.2010 DE 102010035223
(43) Veröffentlichungstag der Anmeldung: 26.06.2013
(73) Patentinhaber: JENOPTIK Optical Systems GmbH, 07745 Jena (DE)
(72) Erfinder: REICHMANN, Lutz, 07743 Jena (DE); BENING, Matthias, 07745 Jena (DE)
(74) Vertreter: Schaller, Renate
(86) Internationale Anmeldenummer: PCT/DE2011/075188
(87) Internationale Veröffentlichungsnummer: WO 2012/037933

(56) Entgegenhaltungen:
- US-A- 5 194 993

## Beschreibung

Die Erfindung betrifft eine justierbare Fassung für optische Bauteile in der Art gemäß der DE 44 00 869 C1.

Aus der US 6,876,494 B2 ist eine Vorrichtung bekannt mit welcher Licht in einem vorgegebenen Strukturmuster auf einen Wafer projiziert wird, indem das Licht über mikrooptische Bauelemente räumlich moduliert wird. Für die Qualität der Modulation ist unter anderem die hochgenaue Justierung eines zur Vorrichtung gehörenden Mikrolinsenarrays zu einem hierzu korrespondierenden Lochblendenarray, welches in Richtung der optischen Achse hinter dem Mikrolinsenarray angeordnet ist, von Bedeutung.

Die in der US 6,876,494 B2 offenbarte Vorrichtung geht von einem Stand der Technik aus, beschrieben in der JP 2001-21830, nach dem in einer gattungsgleichen Vorrichtung ein Lochblendenarray zu einem Mikrolinsenarray positioniert wird.

Es wird dargelegt, dass das in der JP 2001-21830 verwendete Mikrolinsenarray aus Mikrolinsen mit einer kleinen numerischen Apertur und einer Brennweite von 5 mm besteht, weshalb eine exakte Positionierung in Richtung der optischen Achse nicht Gegenstand von Überlegungen sei.

Wird jedoch ein Mikrolinsenarray verwendet mit Mikrolinsen einer großen numerischen Apertur und einer Fokuslänge von ungefähr 250-300 µm, so sei eine hochgenaue Positionierung des Lochblendenarrays zum Mikrolinsenarray in Richtung der optischen Achse notwendig, sodass die einzelnen, durch die Mikrolinsen gebündelten Lichtanteile in die Lochblenden fokussiert werden.

Um das Mikrolinsenarray und das Lochblendenarray auf einen exakt vorgegebenen Abstand zueinander zu positionieren, wird nun gemäß der US 6,876,494 B2 vorgeschlagen, am Mikrolinsenarray oder am Lochblendenarray wenigstens einen Vorsprung zum anderen Array hin auszubilden, der in Richtung der optischen Achse eine vorgegebene Höhe aufweist und für den Abstand der Arrays bestimmend ist. So könne die relative Position der Arrays zueinander in Richtung der optischen Achse genau eingestellt werden.

Anstelle des wenigstens einen Vorsprungs könne zwischen das Mikrolinsenarray und das Lochblendenarray auch ein Distanzstück mit einer vorgegebenen Dicke eingefügt sein.

Zur Notwendigkeit der genauen Positionierung, auch senkrecht zur optischen Achse (laterale Positionierung), sind aus der US 6,876,494 B2 keine Angaben zu entnehmen.

Klar ist jedoch, dass eine laterale Justage der beiden Arrays bei mittelbarem Kontakt über ausgebildete Vorsprünge oder ein Distanzstück reibungsbehaftet ist.

Eine feinfühlige, deterministische Justage in einer Größenordnung von 0.05 µm, wie sie von der Anmelderin angestrebt wird, wird durch den stick-slipp Effekt erschwert.

Justierbare Fassungen für optische Bauelemente, die eine laterale Justierung, das heißt eine Justierung in einer Ebene senkrecht zur optischen Achse eines optischen Systems ermöglichen, bestehen in der Regel aus einem äußeren Fassungsteil, das mit dem Gehäuse des optischen Systems fest verbunden ist oder Bestandteil des Gehäuses ist und einem inneren Fassungsteil, das das optische Bauelement trägt und zum äußeren Fassungsteil in der Ebene mittels Stellelementen verschoben und verdreht werden kann.

Bekannt sind justierbare Fassungen bei denen die Fassungsteile Einzelteile sind, die nach der Justierung zueinander fixiert werden müssen und solche, bei denen die Fassung monolithisch hergestellt sind und die Fassungsteile selbsthemmend in der justierten Lage verbleiben, ohne dass diese fixiert werden muss.

In der Regel wird die erstgenannte Art von Fassungen für größere Stellwege mit einer geringeren Feinfühligkeit und die zweitgenannte Art von Fassungen für kleine Stellwege mit einer hohen Feinfühligkeit verwendet.

Aus der DE 44 00 869 ist eine justierbare Fassung (hier Vorrichtung zur lateralen Justierung von Linsen innerhalb eines Hochleistungsobjektives) bekannt, bei der die Fassungsteile Einzelteile sind.

Die Fassung besteht aus einem inneren Fassungsteil (hier Linsenfassung) und einem äußeren Fassungsteil (hier erste Fassung) die miteinander über eine lösbare, kraftschlüssig axial wirkende Spanneinrichtung verbunden sind.

Das innere Fassungsteil, in dem die Linse gehalten ist, wird innerhalb des äußeren Fassungsteils, das in ein Objektivgehäuse eingepasst werden kann, durch ausschließlich parallel zur optischen Achse des Objektivs wirkende Andruckkräfte gehalten, die während einer lateralen Justierung, senkrecht zur optischen Achse, durch Gegenkräfte, erzeugt von in dem inneren Fassungsteil angeordneten Piezotranslatoren teilweise kompensiert werden, sodass eine laterale Verschiebung des inneren Fassungsteils innerhalb des äußeren Fassungsteils mit geringer radialer Kraftwirkung möglich ist.

Das äußere Fassungsteil weist eine innere Planfläche auf, an welcher das innere Fassungsteil über Andruckmittel angelegt ist. Vorteilhafterweise werden als Andruckmittel ein mit dem äußeren Fassungsteil fest verbundener Anlagering, ein Federring und ein Abstimmring der an der inneren Fassung angelegt ist, verwendet. Die Andruckkraft des Andruckmittels, bestimmt durch die Abmaße des Abstimmrings, sowie die Federkraft des Federrings, ist so dimensioniert, dass das innere Fassungsteil auch bei mechanischen Belastungen, z. B. beim Transport, in ihrer Lage sicher gehalten wird. Durch das ausschließliche Wirken von axialen Kräften beim Fixieren des inneren Fassungsringes soll deren mögliche Dejustierung beim Fixieren vermieden werden.

Die während der Justierung wirkende Gegenkraft, erzeugt durch die Piezotranslatoren, ist geringer als die Andruckkraft, sodass das innere Fassungsteil immer noch durch axiale Kräfte an die innere Planfläche angelegt wird und nicht undefiniert im äußeren Fassungsteil verrutschen kann. Eine Verschiebung erfolgt erst bei radialer Kraftwirkung über radial angreifende Stellelemente.

Welche Stellelemente verwendet werden, hat einen wesentlichen Einfluss auf die Reproduzierbarkeit der Justierung, ihre Feinfühligkeit, den möglichen Stellweg und die Bedienerfreundlichkeit.

Vorteilhaft ist die Anordnung von vier Stellelementen um 90° zueinander versetzt. Da den Stellelementen in der Vorrichtung gemäß der DE 44 00 869 keine Haltefunktion zukommt und die zu überwindende axiale Andruckkraft während der Justierung gering ist, erweist sich die Verwendung von Piezotranslatoren als Stellelemente als besonders vorteilhaft.

Eine Vorrichtung gemäß der DE 44 00 869 ist nicht geeignet, um zwei optische Bauteile, eine Baugruppe bildend, zueinander und die Baugruppe zu einer Bezugsbasis, z. B. der optischen Achse eines Hochleistungsobjektives zu justieren.

Aus der DE 10 2008 029 161 B3 ist eine monolithische Fassung für eine Linse bekannt. Sie besteht aus einer ringförmigen Scheibe, die durch Schlitze in ein inneres und ein äußeres Fassungsteil unterteilt sind, die miteinander bevorzugt an drei Stellen verbunden bleiben. Die verbleibenden Verbindungen, deren geometrische Form und Größe grundsätzlich durch die Lage und Gestalt der Schlitze unterschiedlich ausgeführt werden kann, ist bestimmend für den möglichen Stellweg und die Feinfühligkeit der Justierung. Gemäß der DE 10 2008 029 161 B3 sind die Verbindungen durch Kniehebel gebildet, die aus zwei Gliedern bestehen, die an einem Ende miteinander über ein Festkörpergelenk verbunden sind und miteinander einen Winkel von größer 90° und kleiner 180° einschließen und deren andere Enden mit dem äußeren bzw. dem inneren Fassungsteil über Festkörpergelenke verbunden sind.

Die Festkörpergelenke sind durch die Gestalt und Anordnung der Schlitze gebildete Verjüngungen.

Durch Krafteinwirkung auf die Verbindungen (auch Manipulatoreinheiten) kann der innere Fassungsteil gegenüber dem äußeren Fassungsteil innerhalb einer Ebene verschoben und verdreht werden. Monolithische Fassungen mit anders ausgeführten Manipulatoreinheiten sind z. B. aus der EP 1 577 693 A2 und DE 10 2007 030 579 A1 bekannt. Die Geometrie der Manipulatoreinheiten (Form und Dimensionierung) ist bestimmend für den möglichen Verstellweg und die Feinfühligkeit der Verstellung.

Auch eine Vorrichtung gemäß der DE 10 2008 029 161 B3 ist nicht geeignet, um zwei optische Bauteile, eine Baugruppe bildend, zueinander und die Baugruppe zu einer Bezugsbasis, z. B. der optischen Achse eines optischen Systems, zu justieren.

Eine weitere justierbare Fassung ist aus der US 5 194 993 bekannt.

Der Erfindung liegt die Aufgabe zugrunde eine justierbare Fassung zu schaffen in der zwei optische Bauteile, eine optische Baugruppe bildend, zueinander über einen großen Verstellbereich sehr feinfühlig justiert werden können und die Baugruppe zu einer Bezugsbasis justiert werden kann.

Die erfindungsgemäße Aufgabe wird für eine justierbare Fassungsbaugruppe mit einer ersten justierbaren Fassung, bestehend aus einem äußeren Fassungsteil und einem inneren Fassungsteil, das im äußeren Fassungsteil in einer Ebene senkrecht zu einer Achse mittels Stellschrauben verschiebbar und fixierbar angeordnet ist, sowie einer lösbaren, kraftschlüssig axial wirkenden Spanneinrichtung (4), dadurch gelöst, dass das äußere Fassungsteil eine zweite justierbare Fassung und das innere Fassungsteil eine dritte justierbare Fassung darstellen, die erfindungsgemäß ausgebildet und miteinander in Verbindung stehen. Das äußere Fassungsteil und das innere Fassungsteil sind jeweils, abgesehen von den Manipulatoren, monolithisch, also aus einem Stück hergestellt. Sie bestehen jeweils aus einem äußeren Fassungsrahmen und einem inneren Fassungsrahmen, die jeweils über wenigstens drei Manipulatoreinheiten monolithisch miteinander verbunden sind. In den inneren Fassungsrahmen ist jeweils ein optisches Bauteil fixiert. Zwecks Manipulation der Fassungsteile durch Betätigen der Manipulatoreinheiten, ist je Manipulatoreinheit ein Manipulator vorhanden.

Der innere Fassungsrahmen des äußeren Fassungsteils steht mit dem äußeren Fassungsrahmen des inneren Fassungsteils über die Spanneinrichtung in Verbindung.

Dadurch können bei gelöster Spanneinrichtung und fixierten, das heißt fest gezogenen Stellschrauben die beiden optischen Bauteile durch Manipulation des äußeren Fassungsteils und des inneren Fassungsteils oder auch nur durch Manipulation eines der beiden Fassungsteile, zueinander justiert werden.

Bei fixierter, das heißt kraftschlüssig axial wirkender, das innere Fassungsteil (2) mit dem äußeren Fassungsteil (1) verspannender Spanneinrichtung und gelösten Stellschrauben ist eine weitere, feinfühligere Justage der beiden optischen Bauelemente zueinander durch Manipulation des inneren Fassungsteils und eine Justage beider optischer Bauteile relativ zu einer Bezugsbasis durch Manipulation des äußeren Fassungsteils möglich.

Vorteilhaft weißt das äußere Fassungsteil mehrere senkrecht zur Achse verlaufende Gewindebohrungen auf, in die die Stellschrauben einführbar sind. Damit kann eine Justierung der beiden Fassungsteile zueinander mittels der Stellschrauben zueinander stattfinden, ohne dass die Fassung zuvor in ein Gehäuse eingesetzt wird. Stattdessen könnten die Stellschrauben auch in einem Gehäuse vorgesehen sein, in das die Fassung eingesetzt wird und in dem die äußere Fassung mit ihrem äußeren Fassungsrahmen fixiert wird.

Vorteilhaft werden mit der justierbaren Fassungsgruppe optische Bauteile zueinander justiert die mikrooptische Bauteile sind.

Das im inneren Fassungsteil gefasste optische Bauteil kann z. B. ein Mikrolinsenarray und das im äußeren Fassungsteil gefasste optische Bauteil ein Raumfilterarray sein.

Die Erfindung soll nachfolgend anhand von Ausführungsbeispielen und Zeichnungen näher erläutert werden. Hierzu zeigen:
- Fig. 1: eine Explosionsdarstellung einer erfindungsgemäßen Fassungsbaugruppe montiert an ein Gehäuse in dem ein drittes optisches Bauteil fixiert ist
- Fig. 2: eine Draufsicht auf eine Fassungsbaugruppe gemäß Fig.1 von Seiten des inneren Fassungsteils her
- Fig. 3: eine Draufsicht auf das äußere Fassungsteil
- Fig. 4: eine Schnittdarstellung der in Fig. 2 dargestellten Fassungsbaugruppe

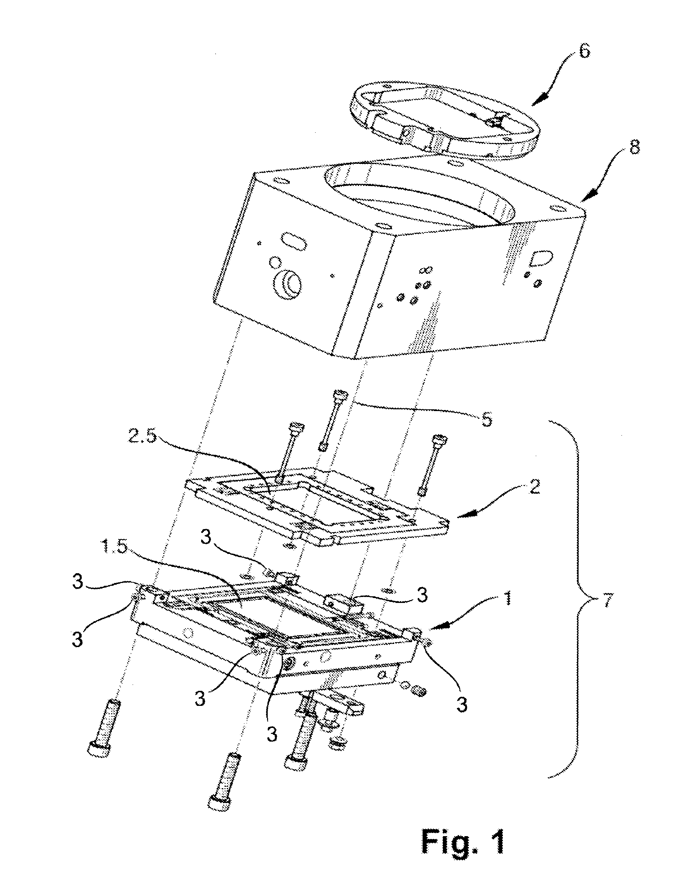

Zur vollständigen Erläuterung der Funktion einer erfindungsgemäßen Fassungsbaugruppe ist in Fig.1 entlang einer Achse 5 zusätzlich zu der Fassungsbaugruppe 7, ein Gehäuse 8 und ein zusätzliches, gefasstes drittes optisches Bauteil 6 dargestellt, das die Bezugsbasis sein kann, zu der die mit Mitteln der Fassungsbaugruppe 7 zueinander justierten optischen Bauteile 1.5, 2.5 ebenfalls mit Mitteln der Fassungsbaugruppe 7 justiert werden können.

Der Einfachheit halber soll nachfolgend nur von einer Achse 5 gesprochen werden, zu der Verschiebungen und Verdrehungen in hierzu senkrecht angeordneten Ebenen zwecks Justage möglich sind. Die Achse 5 kann sowohl die optische Achse eines der optischen Bauteile 1.5, 2.5 oder 6 sein oder auch eine gemeinsame optische Achse auf der letztendlich die optischen Achsen der Bauteile 1.5, 2.5, 6 angeordnet werden. Die Fassungsbaugruppe 7 besteht im Wesentlichen aus einem äußeren Fassungsteil 1 und einem inneren Fassungsteil 2, einer Spanneinrichtung 4 und einer Vielzahl von Stellschrauben 3.

Das äußere und das innere Fassungsteil 1, 2 sind jeweils monolithische Bauteile, die durch Schlitze in einen äußeren Fassungsrahmen 1.1, 2.1 und einen inneren Fassungsrahmen 1.2, 2.2 unterteilt sind, wobei jeweils zwischen dem äußeren 1.1, 2.1 und dem inneren Fassungsrahmen 1.2, 2.2 der beiden Fassungsteile 1, 2 Materialverbindungen bestehen, die als Manipulatoreinheiten 1.3, 2.3 ausgebildet sind.

In den äußeren Fassungsrahmen 1.1, 2.1 sind jeweils auf die einzelnen Manipulatoreinheiten 1.3, 2.3 in einer Ebene senkrecht zur Achse 5 wirkende Manipulatoren 1.4, 2.4 vorgesehen. Bei gezielter Manipulation der Manipulatoren 1.4, 2.4, das können Piezostellelemente oder Stellschrauben sein, wird auf die Manipulatoreinheiten 1.3, 2.3 ein Stellweg eingeleitet, der mit einem durch die Form und Dimensionierung der Manipulatoreinheiten 1.3, 2.3 bestimmten Übersetzungsverhältnis zu einer Lageänderung, durch Verschiebung und Verdrehung, des jeweils inneren Fassungsrahmens 1.2, 2.2 führt. In den inneren Fassungsrahmen 1.2, 2.2 ist jeweils ein optisches Bauteil 1.5, fixiert.

Monolithische Fassungen, wie sie das innere und das äußere Fassungsteil 2, 1 darstellen, sind aus dem Stand der Technik bekannt.

Die Auswahl der Form und Dimensionierung der Manipulatoreinheiten 1.3, 2.3 und der Manipulatoren 1.4, 2.4 trifft der Fachmann in Abhängigkeit vom gewünschten Stellbereich, der gewünschten Feinfühligkeit sowie den Platz- und Zugangsbeschränkungen, die ihm für die Konstruktion vorgegeben sind.

Es ist daher nicht Gegenstand der Erfindung wie die Manipulatoreinheiten 1.3, 2.3 konkret ausgebildet sind. Hierfür erhält der Fachmann vielfältige Hinweise aus dem Stand der Technik.

Erfindungswesentlich hingegen ist die erfindungsgemäße konkrete Anordnung und Verbindung zweier monolithischer Fassungen zur Bildung einer Fassungsbaugruppe 7.

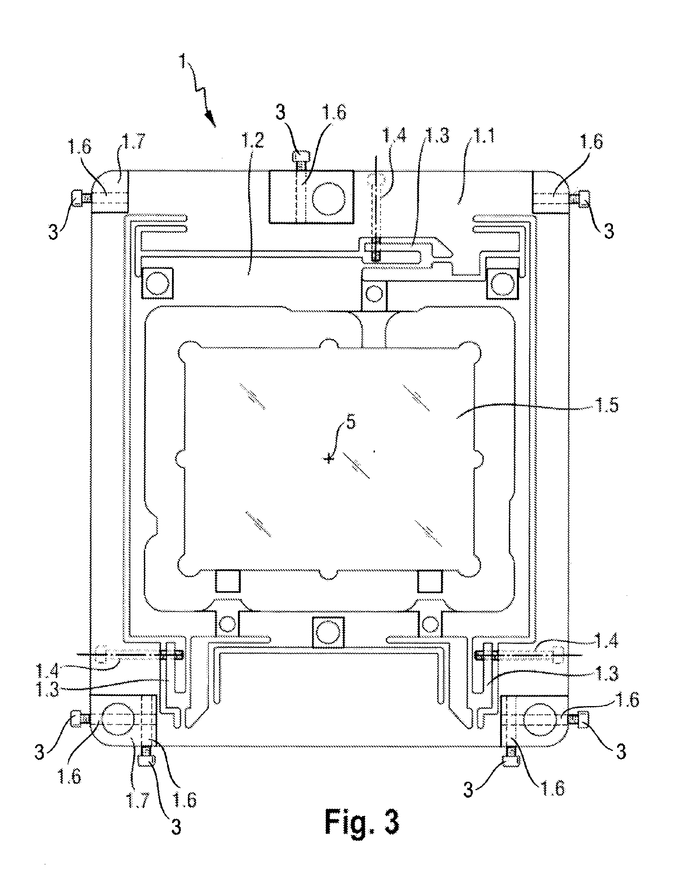

In Fig. 3 ist das äußere Fassungsteil 1 in Draufsicht gezeigt. Gut erkennbar ist dessen Unterteilung in dessen äußeren Fassungsrahmen 1.1, dessen inneren Fassungsrahmen 1.2 und dessen Manipulatoreinheiten 1.3, welche durch Schlitze, die durch Erodierschnitte eingebracht wurden, gegeben ist. Gegenüber diesen genannten Funktionsteilen, die in einer Ebene liegen auf der die Achse 5 senkrecht steht, sind im Randbereich des äußeren Fassungsteils 1 an dessen äußeren Fassungsrahmen 1.1 Erhebungen 1.7 ausgebildet in denen Gewindebohrungen 1.6, in einer Ebene senkrecht zur Achse 5, vorgesehen sind.

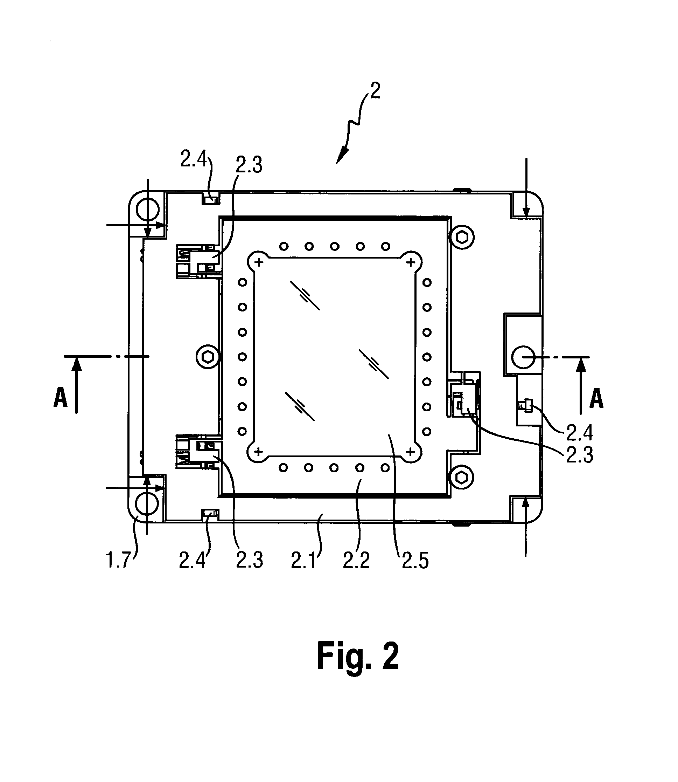

Fig. 2 zeigt eine Draufsicht auf die Fassungsbaugruppe 7 von Seiten des inneren Fassungsteils 2 her. Die Außenkontur des inneren Fassungsteils 2 ist an die Lage der Erhebungen 1.7 so angepasst, dass es zwischen den Erhebungen 1.7 Spiel hat und innerhalb eines vorgegebenen Verstellbereiches verschoben werden kann.

Zur Verschiebung werden in die Gewindebohrungen 1.6 temporär Stellschrauben 3 eingeführt, die durch die Einleitung eines Stellweges das innere Fassungsteil 2 verschieben und es, in Zusammenwirkung mit in entgegengesetzter Richtung wirkenden Stellschrauben 3, abschließend klemmen. Nachdem die beiden Fassungsteile 1, 2 durch die Spanneinrichtung 4 zueinander fixiert sind, was erst nach einem weiteren Justageschritt erfolgt, können die Stellschrauben 3 dann entfernt werden.

Mit dem beschriebenen ersten Justageschritt (Vorjustierung) können innerhalb eines großen Stellbereiches, jedoch mit einer entsprechend geringen Feinfühligkeit, die beiden optischen Bauteile 1.5, 2.5 zueinander justiert werden.

Gemäß der beschriebenen Ausführung der Fassungsbeaugruppe können die beiden Fassungsteile 1,2 zueinander vor dem Einbau der Fassungsbaugruppe 7 in das Gehäuse 8 justiert werden.

In einer anderen Ausführung wird das äußere Fassungsteil 1 im Gehäuse 8 fixiert und das innere Fassungsteil 2 wird mittels Stellschrauben 3, die im Gehäuse 8 angeordnet sind, vorjustiert.

Die Spanneinrichtung 4 ist eine lösbare Verbindung, welche das äußere Fassungsteil 1 und das innere Fassungsteil 2 kraftschlüssig miteinander verbinden kann. Der Fachmann erhält zur Ausführung einer derartigen Spanneinrichtung 4 hinreichend Anregungen aus dem Stand der Technik.

In diesem ersten Ausführungsbeispiel soll das äußere Fassungsteil 1 über einen größeren Stellbereich, mit einer geringeren Feinfühligkeit im Vergleich zum inneren Fassungsteil 2, justierbar sein.

Entsprechend können die beiden optischen Bauteile 1.5, 2.5 erst durch Manipulation am äußeren Fassungsteil 1 (Grobjustierung) und anschließend durch Manipulation am inneren Fassungsteil 2 (Feinjustierung) oder auch wahlweise nur durch die Manipulation eines der beiden Fassungsteile 1, 2 justiert werden.

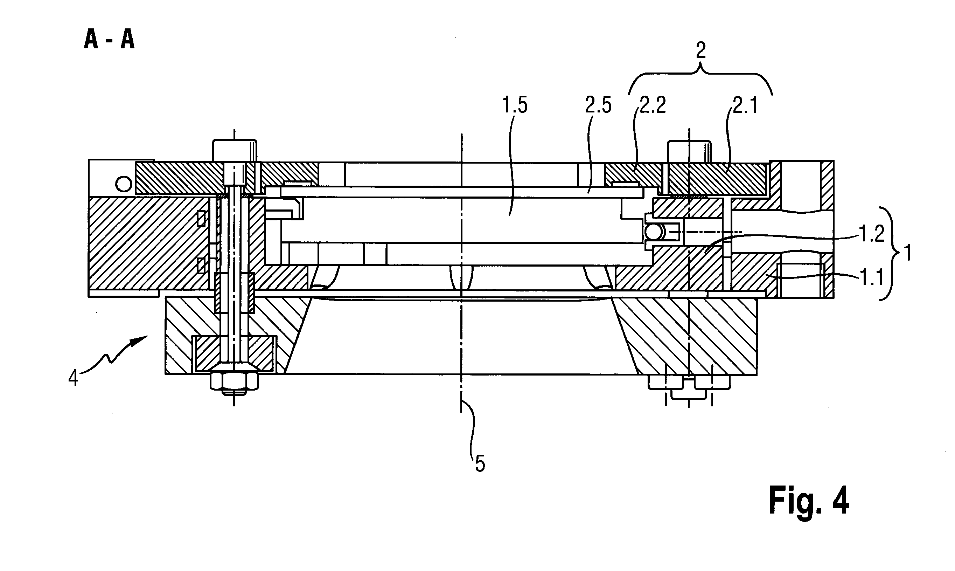

Gemäß Fig. 4, ist die Spanneinrichtung 4 so angeordnet, dass der innere Fassungsrahmen 1.2 des äußeren Fassungsteils 1 mit dem äußeren Fassungsrahmen 2.1 des inneren Fassungsteils 2 verbunden ist.

Die Manipulatoreinheiten 1.3, 2.3 der Fassungsteile 1, 2 sind vorteilhaft so ausgelegt, dass das äußere Fassungsteil 1 über einen größeren Stellbereich, mit einer geringeren Feinfühligkeit im Vergleich zum inneren Fassungsteil 2, justierbar ist.

Nachfolgend soll die Justage zweier in einer erfindungsgemäßen Fassungsbaugruppe 7 gefassten optischen Bauteile 1.5, 2.5 zueinander und zu einer Bezugsbasis erläutert werden.

Die Justage in einer Ebene senkrecht zur Achse 5 (laterale Positionierung) erfolgt in mehreren Schritten, final mit einer Feinfühligkeit in der Größenordnung von 0,050 µm. Die Justageschritte werden mit unterschiedlichen Mitteln, mit einem zunehmend geringeren Stellbereich zu Gunsten einer zunehmend höheren Feinfühligkeit, und mit unterschiedlichen Messverfahren zur Validierung des Justagezustandes durchgeführt.

Für die schrittweise (mehrstufige) Justage wird zunächst in einem ersten Schritt das innere Fassungsteil 2 auf dem äußeren Fassungsteil 1 montiert, indem es zwischen die am äußeren Fassungsteil 1 ausgebildeten Erhebungen 1.7 gelegt wird. Dabei wird das innere Fassungsteil 2 mit an dessen äußeren Fassungsrahmen 2.1 angreifenden Stellschrauben 3 im äußeren Fassungsrahmen 1.1 des äußeren Fassungsteils 1 positioniert (Montage, Vorjustage). Die Justage erfolgt so lange, bis die Justagemarken, die auf den beiden optischen Bauteilen 1.5, 2.5 vorhanden sind, bestmöglich übereinstimmen. Der erreichte Zustand wird durch Spannen der sich jeweils gegenüberliegenden Stellschrauben 3 unter mikroskopischer Beobachtung arretiert.

Diese Vorjustierung ist mit einer Justiergenauigkeit in einer Größenordnung von 5 bis 10 µm möglich.

In einem nächsten Schritt wird die Justage bis zu einer Justiergenauigkeit besser als 2 µm vorgenommen (Grobjustage). Dabei ist die Spanneinrichtung 4 gelöst und die Stellschrauben 3 sind festgestellt.

Durch Betätigung der Manipulatoreinheiten 1.3 des äußeren Fassungsteils 1 kann nun das im äußeren Fassungsteil 1 gefasste optische Bauteil 1.5 gegenüber dem im inneren Fassungsteil 2 gefassten optischen Bauteil 2.5 verschoben und gedreht werden. Der mögliche Stellbereich ist geringer als der im ersten Justageschritt aber wesentlich feinfühliger. Da die Manipulatoreinheiten 1.3 selbsthemmend sind, ist keine Arretierung erforderlich.

Bevor anschließend die Stellschrauben 3 entfernt werden können, die bis zum Abschluss des zweiten Justageschrittes das innere Fassungsteil 2 und das äußere Fassungsteil 1 zueinander fixiert haben, wird die Spanneinrichtung 4 arretiert. Typischerweise tritt bei der Arretierung eine Veränderung des Justagezustandes auf, sei es durch Drehmomente oder Kräfte die zur Betätigung der Spanneinrichtung 4 erforderlich sind (z. B. Anzugsdrehmoment einer Schraube) oder durch Verspannung der Fassungsteile 1, 2. Das lässt sich auch mit einer Spanneinrichtung 4, die nur axiale Kräfte auf die Fassungsteile 1, 2 aufbringt, nicht vollständig vermeiden.

Um die gewünschte Feinfühligkeit von 0,05 µm zu erreichen und einen Effekt aus der Fixierung des mit dem zweiten Justageschritt erreichten Justagezustands zu vermeiden, wird ein dritter Justageschritt (Feinjustage) durchgeführt, indem am inneren Fassungsteil 1 manipuliert wird. Eine Fixierung dieses Justageergebnisses erfolgt durch die Selbsthemmung der Manipulatoreinheiten 2.3 des inneren Fassungsteils 2.

Die Justage der beiden optischen Bauteile 1.5, 2.5 ist nun abgeschlossen.

Nach Abschluss der Justage der beiden optischen Bauteile 1.5, 2.5 zueinander, kann diese von den beiden optischen Bauteilen 1.5, 2.5 gebildete optischen Baugruppe zu einer Bezugsbasis justiert werden, ohne dass der Justagezustand der beiden optischen Bauteile 1.5, 2.5 zueinander verändert wird. Diese Justage erfolgt mit einer Feinfühligkeit von etwa 0,2 µm in einem Stellbereich von 30 µm.

Sie erfolgt durch erneute Manipulation am äußeren Fassungsteil 1, allerdings bei arretierter Spanneinrichtung 4.

Entsprechend Fig.1 wird die fertig justierte Fassungsbaugruppe 7 an einem Gehäuse 8 angeschraubt, in welcher bereits ein drittes optisches Bauteil 6 montiert ist.

Diese Justage muss ebenfalls nicht arretiert werden, da die Manipulatoreinheiten 1.3 des äußeren Fassungsteils 1 selbsthemmend sind.

Um die geforderte Stabilität unter Temperatureinfluss zu erreichen, liegt es auf der Hand, für die Fassungsteile 1, 2 Werkstoffe mit möglichst gleichem thermischen Ausdehnungskoeffizient zu verwenden. Das heißt, die Fassungsteile 1, 2 werden vorteilhaft aus Invar gefertigt, wenn die optischen Bauteile aus Fused silica (Quarz) gefertigt sind. Vorteilhaft ist aber auch die Ausführung der Fassungsteile 1, 2 aus hochfestem Edelstahl, vorzugsweise mit einer Elastizitätsgrenze von mindestens 800 MPa.

Eine Fassungsbaugruppe 7 ist insbesondere dann vorteilhaft, wenn die zu justierenden optischen Bauteile 1.5, 2.5 bzw. 1.5, 2.5 und 6 mikrooptische Bauelemente sind. So können z. B. in Belichtungseinrichtungen zur maskenlosen Belichtung von Wafern das erste optische Bauteil 1.5 ein Raumfilterarray oder Lochblendenarray, das zweite optische Bauteil 2.5 ein Mikrolinsenarray und das gegebenenfalls dritte optische Bauteil 6 ein Mikrospiegelarray oder ein weiterer Filter sein. Auch wenn derartige Bauteile genau genommen eine Vielzahl von optischen Achsen aufweisen, soll vereinfacht auch hier von nur einer Achse 5 gesprochen werden, welche die Schwerpunktachse sein kann.

Die Positionierung derartiger Bauteile zueinander muss in Richtung der optischen Achse eines optischen Systems in das sie integriert sind, mit einer Genauigkeit in der Größenordnung weniger µm (z. B.: +/- 3 µm) erfolgen.

Bei einer Fassungsbaugruppe 7 wird ein axialer Abstand zwischen dem ersten und dem zweiten optischen Bauteil 1.5, 2.5 durch Einbringen von Distanzstücken in den Spannmechanismus 4 realisiert, sodass sie die Lage der Fassungsteile 1, 2 relativ zueinander in Richtung der optischen Achse und somit indirekt den Abstand der optischen Bauteile 1.5, 2.5 zueinander bestimmen.

Durch die Gestaltung der Distanzstücke als Dreipunktauflage wird die Justage des Abstands und der Parallelität ermöglicht. Gleichzeitig wird eine Verspannung der zu verbindenden Fassungsteile 1, 2 verhindert.

Die Fassungsbaugruppe 7 erfüllt höchste Anforderungen an Stabilität gegenüber einer Temperaturänderung oder Schockbelastung, als auch extrem beengte Bauraumrestriktionen in der Manipulationsebene, aber auch in Richtung der optischen Achse. Um den benötigten Bauraum zu minimieren, wird die Manipulation für die Feinjustage mit größtmöglicher Feinfühligkeit bei kleinem Bauraum ausgeführt. Hierfür ist es erforderlich, den Stellbereich der Manipulatoreinheiten 2.3 auf ein Mindestmaß zu reduzieren. Dies wird mittels der oben beschriebenen Aufteilung der Justage in 3 Justageschritte erreicht, die mit verschiedenen Mitteln ausgeführt werden.

Aufgrund der gegebenen Platzverhältnisse ist die Fassungsbaugruppe 7 so ausgelegt, dass alle Eingriffe (Manipulation, Arretierung) von der Seite, nicht jedoch von oben oder unten (d.h. in Richtung der optischen Achse) erfolgen.

Die Justierung ist auch nach Anordnung der Fassungsbaugruppe 7 in einem komplettierten optischen System wiederholbar, da die Justagemittel im Gerät verbleiben.

### Bezugszeichenliste

- 1: äußeres Fassungsteil
- 1.1: äußerer Fassungsrahmen des äußeren Fassungsteils
- 1.2: innerer Fassungsrahmen des äußeren Fassungsteils
- 1.3: Manipulatoreinheit des äußeren Fassungsteils
- 1.4: Manipulator des inneren Fassungsteils
- 1.5: im äußeren Fassungsteil gefasstes optisches Bauteil
- 1.6: Gewindebohrung
- 1.7: Erhebung

- 2: inneres Fassungsteil
- 2.1: äußerer Fassungsrahmen des inneren Fassungsteils
- 2.2: innerer Fassungsrahmen des inneren Fassungsteils
- 2.3: Manipulatoreinheit des inneren Fassungsteils
- 2.4: Manipulator des inneren Fassungsteils
- 2.5: im inneren Fassungsteil gefasstes optisches Bauteil

- 3: Stellschraube
- 4: Spanneinrichtung
- 5: Achse
- 6: drittes optisches Bauteil
- 7: Fassungsbaugruppe
- 8: Gehäuse

## Patentansprüche

1. Justierbare Fassungsbaugruppe (7) mit einem äußeren Fassungsteil (1) und einem inneren Fassungsteil (2), wobei a) das innere Fassungsteil (2) im äußeren Fassungsteil (1) in einer Ebene senkrecht zu einer optischen Achse mittels Stellschrauben (3) verschiebbar und fixierbar angeordnet ist und die beiden Fassungsteile (1, 2) gemeinsam eine erste justierbare Fassung bilden, b) das äußere Fassungsteil (1) eine zweite justierbare Fassung und das innere Fassungsteil (2) eine dritte justierbare Fassung bilden,
c) das äußere Fassungsteil (1) und das innere Fassungsteil (2) jeweils aus einem äußeren Fassungsrahmen (1.1, 2.1) und einem inneren Fassungsrahmen (1.2, 2.2), in welchen jeweils ein optisches Bauteil (1.5, 2.5) fixiert ist, bestehen, die jeweils über wenigstens drei einen Manipulator (1.4, 2.4) zur Manipulation der Fassungsteile (1, 2) aufweisende Manipulatoreinheiten (1.3, 2.3) monolithisch miteinander verbunden sind
d) der innere Fassungsrahmen (1.2) des äußeren Fassungsteils (1) mit dem äußeren Fassungsrahmen (2.1) des inneren Fassungsteils (2) über eine lösbare, kraftschlüssig wirkende Spanneinrichtung (4) miteinander in Verbindung steht, sodass
e) bei gelöster Spanneinrichtung (4) und fest gezogenen Stellschrauben (3) die beiden optischen Bauteile (1.5, 2.5) durch Manipulation des äußeren Fassungsteils (1) und/oder des inneren Fassungsteils (2) zueinander justierbar sind und
f) bei kraftschlüssig axial wirkender, das innere Fassungsteil (2) mit dem äußeren Fassungsteil (1) verspannender Spanneinrichtung (4) sowie gelösten Stellschrauben (3) die beiden optischen Bauteile (1.5, 2.5) relativ zueinander durch eine Manipulation des inneren Fassungsteils (2) und die beiden optischen Bauteile (1.5, 2.5) gemeinsam relativ zu einer Bezugsbasis durch eine Manipulation des äußeren Fassungsteils (1) justierbar sind.

2. Justierbare Fassungsbaugruppe (7) nach Anspruch 1, **dadurch gekennzeichnet, dass**
das äußere Fassungsteil (1) mehrere senkrecht zur Achse (5) verlaufende Gewindebohrungen (1.6) aufweist, in die die Stellschrauben (3) einführbar sind.

3. Justierbare Fassungsbaugruppe (7) nach Anspruch 1, **dadurch gekennzeichnet, dass**
die beiden optischen Bauteile (1.5, 2.5) mikrooptische Bauteile sind.

4. Justierbare Fassungsbaugruppe (7) nach Anspruch 3, **dadurch gekennzeichnet, dass**
das im inneren Fassungsteil (2) gefasste optische Bauteil (2.5) ein Mikrolinsenarray und das im äußeren Fassungsteil (1) gefasste optische Bauteil (1.5) ein Raumfilterarray ist.

## Claims

1. Adjustable mount assembly (7) having an outer mount part (1) and an inner mount part (2), wherein a) the inner mount part (2) is arranged in the outer mount part (1) so as to be displaceable and fixable in a plane perpendicular to an optical axis by means of adjusting screws (3), and the two mount parts (1, 2) collectively form a first adjustable mount,
b) the outer mount part (1) forms a second adjustable mount, and the inner mount part (2) forms a third adjustable mount,
c) the outer mount part (1) and the inner mount part (2) respectively comprise an outer mount frame (1.1, 2.1) and an inner mount frame (1.2, 2.2) in which an optical component (1.5, 2.5) is fixed in each instance and which are connected to one another monolithically in each instance by at least three manipulator units (1.3, 2.3) having a manipulator (1.4, 2.4) for manipulating the mount parts (1, 2),
d) the inner mount frame (1.2) of the outer mount part (1) communicates with the outer mount frame (2.1) of the inner mount part (2) via a releasable clamping device (4) effecting a frictional engagement, so that
e) when the clamping device (4) is released and the adjusting screws (3) are tightened, the two optical components (1.5, 2.5) can be adjusted relative to one another by manipulating the outer mount part (1) and/or inner mount part (2), and
f) when the clamping device (4) acts axially in a frictionally engaging manner so as to clamp the inner mount part (2) to the outer mount part (1) and the adjusting screws (3) are loosened, the two optical components (1.5, 2.5) are adjustable relative to one another by manipulating the inner mount part (2), and the two optical components (1.5, 2.5) are jointly adjustable relative to a reference base by manipulating the outer mount part (1).

2. Adjustable mount assembly (7) according to claim 1, **characterized in that** the outer mount part (1) has a plurality of threaded bore holes (1.6) which extend perpendicular to the axis (5) and into which the adjusting screws (3) can be inserted.

3. Adjustable mount assembly (7) according to claim 1, **characterized in that** the two optical components (1.5, 2.5) are microoptical components.

4. Adjustable mount assembly (7) according to claim 3, **characterized in that** the optical component (2.5) mounted in the inner mount part (2) is a microlens array, and the optical component (1.5) mounted in the outer mount part (1) is a spatial filter array.

## Revendications

1. Ensemble de monture ajustable (7) avec une pièce de monture extérieure (1) et une pièce de monture intérieure (2), dans lequel a) la pièce de monture intérieure (2) est disposée dans la pièce de monture extérieure (1) pour pouvoir être déplacée et fixée dans un plan perpendiculaire à un axe optique au moyen de vis de réglage (3) et les deux pièces de monture (1, 2) forment conjointement une première monture ajustable,
b) la pièce de monture extérieure (1) forme une deuxième monture ajustable et la pièce de monture intérieure (2) forme une troisième monture ajustable,
c) la pièce de monture extérieure (1) et la pièce de monture intérieure (2) comprennent chacune un cadre de monture extérieure (1.1, 2.1) et un cadre de monture intérieure (1.2, 2.2), dans lesquels est fixé respectivement un composant optique (1.5, 2.5) et qui sont reliés de manière monolithique dans chaque cas par au moins trois unités de manipulateur (1.3, 2.3) ayant un manipulateur (1.4, 2.4) pour manipuler les pièces de monture (1, 2),
d) le cadre de monture intérieure (1.2) de la pièce de monture extérieure (1) communique avec le cadre de monture extérieure (2.1) de la pièce de monture intérieure (2) par un dispositif de serrage (4) libérable effectuant un engagement à friction, de façon que
e) quand le dispositif de serrage (4) est libéré et les vis de réglage (3) sont serrées, les deux composants optiques (1.5, 2.5) peuvent être ajustés l'un par rapport à l'autre en manipulant la pièce de monture extérieure (1) et/ou la pièce de monture intérieure (2), et
f) quand le dispositif de serrage (4) agisse axialement par friction pour serrer la pièce de monture intérieure (2) avec la pièce de monture extérieure (1) et les vis de réglage (3) sont libérées, les deux composants optiques (1.5, 2.5) peuvent être ajustés relativement l'un par rapport à l'autre par une manipulation de la pièce de monture intérieure (2) et les deux composants optiques (1.5, 2.5) peuvent être ajustés conjointement par rapport à une base de référence par une manipulation de la pièce de monture extérieure (1).

2. Ensemble de monture ajustable (7) selon la revendication 1, **caractérisé en ce que** la pièce de monture extérieure (1) a plusieurs alésages taraudés (1.6) qui s'étendent perpendiculairement à l'axe (5) et dans lesquels les vis de réglage (3) peuvent être introduites.

3. Ensemble de monture ajustable (7) selon la revendication 1, **caractérise en ce que** les deux composants optiques (1.5, 2.5) sont des composants micro-optiques.

4. Ensemble de monture ajustable (7) selon la revendication 3, **caractérise en ce que** le composant optique (2.5) monté dans la pièce de monture intérieure (2) est un réseau de micro-lentilles et le composant optique (1.5) monté dans la pièce de monture extérieure (1) est un réseau de filtre spatial.
